# EUROPÄISCHE PATENTANMELDUNG

(11) **EP 1 967 786 A1**
(43) Veröffentlichungstag der Anmeldung: **10.09.2008**
(21) Anmeldenummer: 08003325.1
(22) Anmeldetag: 23.02.2008
(51) Int. Cl.: F16N 25/00, F16N 13/22, F16N 27/00, F16N 11/08

(54) **Dosiervorrichtung für einen Schmierstoffspender**

(30) Priorität: 06.03.2007 DE 102007011192
(71) Anmelder: Perma-Tec GmbH & Co. KG, 97717 Euerdorf (DE)
(72) Erfinder: Eisenbacher, Egon, 97753 Karlstadt (DE); Hildenbrand, Thomas, 97769 Bad Brückenau (DE)
(74) Vertreter: Albrecht, Rainer Harald

(57) **Zusammenfassung**

Die Erfindung betrifft eine Dosiervorrichtung (1) für einen Schmierstoffspender (2) mit einer Zulauföffnung (3) und zumindest zwei Ablauföffnungen (4, 4') zur Aufteilung der geförderten Schmierstoffmengen und einem in ein Gehäuse (5) der Dosiervorrichtung (1) längsbeweglich eingesetzten Schieber (7), der eine zulaufseitige Axialbohrung (8) aufweist. Erfindungsgemäß sind die Ablauföffnungen (4, 4') über jeweils einen Verdrängungsraum (10, 10') an die zulaufseitige Axialbohrung (8) des Schiebers (7) angeschlossen, wobei die Verdrängungsräume (10, 10') durch Rückschlagventile (12a, 12a') voneinander hydraulisch getrennt sind. Ein Vorwärtshub des Schiebers (7) bewirkt eine Volumenverringerung der Verdrängungsräume (10, 10') und ein Ausströmen des Schmierstoffes aus den Ablauföffnungen (4, 4'). Ein Rückwärtshub des Schiebers (7) bewirkt eine Volumenvergrößerung der Verdrängungsräume (10, 10') und ein Nachströmen des Schmierstoffes durch die Rückschlagventile (12a, 12a').

## Beschreibung

Die Erfindung betrifft eine Dosiervorrichtung für einen Schmierstoffspender mit einer Zulauföffnung und zumindest zwei Ablauföffnungen zur Aufteilung der geförderten Schmierstoffmengen, und mit einem in ein Gehäuse der Dosiervorrichtung längsbeweglich eingesetzten Schieber, der eine zulaufseitige Axialbohrung aufweist. Die Dosiervorrichtung erlaubt mit lediglich einem Schmierstoffspender zwei oder mehr Schmierstellen mit Schmierstoff zu versorgen.

Um Schmierstoff von einem Schmierstoffspender auf mehrere Schmierstellen zu verteilen, sind einfache Abzweigungen nicht geeignet, da aufgrund unterschiedlicher Widerstände, insbesondere Strömungs-, Bauteil-Reibung- oder sonstiger Gegendruck-Widerstände, eine unterschiedliche, undefinierte Schmierung an den verschiedenen Schmierstellen auftreten kann. Eine Dosiervorrichtung mit den eingangs beschriebenen Merkmalen, die eine Aufteilung von Schmierstoff ermöglicht, ist aus der Druckschrift DE 101 48 455 A1 bekannt. Die Dosiervorrichtung ist an einen Schmierstoffspender als Auslassmodul anschließbar, wobei der Förderschieber von einem Pumpenelement des Schmierstoffspenders gegen eine Rückstellfeder zustellbar ist. Der Förderschieber ist in einem Gehäuse als Schieberführung längsbeweglich angeordnet, wobei in Längsrichtung versetzt zwei radiale Ablauföffnungen in dem Gehäuse vorgesehen sind. Bei einer Vorwärtshubbewegung des Förderschiebers kann der Schmierstoff zunächst durch eine Öffnung am Ende des Förderschiebers in eine erste Ablauföffnung einströmen, während eine zweite Ablauföffnung von dem Förderschieber verschlossen ist. Während der Hubbewegung wird anschließend die erste Ablauföffnung von dem Förderschieber verschlossen und Schmierstoff kann durch eine radiale Bohrung und eine Ringnut des Förderschiebers in die zweite Ablauföffnung einströmen. Durch die Stellung des Schiebers werden die Teilvolumen des Schmierstoffes, die durch die erste und die zweite Ablauföffnung strömen, beeinflusst. Bei einem Vorwärtshub des Schiebers können jedoch aufgrund der sich ändernden Abströmquerschnitte unerwünschte Druckspitzen auftreten. Wenn beide Abströmöffnungen zumindest partiell gleichzeitig geöffnet sind, ist die Aufteilung der Schmierstoffmengen undefiniert, und es kann auch zu einem Überströmen zwischen den Ablauföffnungen kommen. Die durch die wechselweise Öffnung der Ablauföffnungen bedingten Nachteile werden noch durch Fertigungsungenauigkeiten verstärkt.

Vor diesem Hintergrund liegt der Erfindung die Aufgabe zugrunde, eine Dosiervorrichtung für einen Schmierstoffspender mit den eingangs beschriebenen Merkmalen anzugeben, die zuverlässig eine definierte Aufteilung der geförderten Schmierstoffmengen auf zumindest zwei Ablauföffnungen ermöglicht.

Die Aufgabe wird ausgehend von einer Dosiervorrichtung mit den eingangs beschriebenen Merkmalen erfindungsgemäß dadurch gelöst, dass die Ablauföffnungen über jeweils einen Verdrängungsraum an die zulaufseitige Axialbohrung des Schiebers angeschlossen sind und dass die Verdrängungsräume durch Rückschlagventile voneinander hydraulisch getrennt sind, wobei ein Vorwärtshub des Schiebers eine Volumenverringerung der Verdrängungsräume und ein Ausströmen des Schmierstoffes aus den Ablauföffnungen bewirkt und wobei ein Rückwärtshub des Schiebers eine Volumenvergrößerung der Verdrängungsräume und ein Nachströmen des Schmierstoffes durch die Rückschlagventile bewirkt. Erfindungsgemäß werden bei einer Vorwärtshubbewegung durch die Ausgestaltung der Verdrängungsräume definierte Volumina des Schmiermittels gleichzeitig durch die Ablauföffnungen abgegeben. Auch die Volumenvergrößerung der Verdrängungsräume, die über die Rückschlagventile wieder mit Schmierstoff gefüllt werden, erfolgt für alle Verdrängungsräume gleichzeitig bei einem Rückwärtshub.

Die pro Hubbewegung geförderte Schmierstoffmenge wird durch die Volumenänderung der Verdrängungsräume bestimmt. Die Volumenänderungen der jeweils unterschiedlichen Ablauföffnungen zugeordneten Verdrängungsräume können dabei für alle Verdrängungsräume gleich oder auch unterschiedlich sein. Das Verhältnis der an den Ablauföffnungen austretenden Schmierstoffmengen kann durch Dimensionierung der Verdrängungsräume variabel eingestellt werden. Die Abgabe des Schmierstoffes durch die an einen Schmierstoffspender angeschlossene Dosiervorrichtung erfolgt im Regelfall über einen langen Zeitraum, wobei zwischen zwei Schmierintervallen, in denen zumindest eine Hubbewegung des Schiebers ausgeführt wird, eine Pause vorgesehen ist. Grundsätzlich ist die von der Dosiervorrichtung abgegebene Schmierstoffmenge auch von dem Hubweg des Schiebers abhängig, so dass je nach Antrieb des Schiebers die abgegebene Schmierstoffmenge durch eine Veränderung des Hubweges variiert werden kann.

Vorzugsweise ist im Rahmen der Erfindung vorgesehen, dass im Bereich der Ablauföffnungen jeweils ein zusätzliches Rückschlagventil angeordnet ist, um bei einem Rückwärtshub ein Zurückströmen des zuvor ausgepressten Schmierstoffes zu vermeiden.

Im Rahmen der Erfindung kann einer der Verdrängungsräume in einer Schieberführung des Schiebers gebildet sein und in Längsrichtung an ein ablaufseitiges Ende des Schiebers anschließen, wobei das diesem Verdrängungsraum zugeordnete Rückschlagventil in dem Schieber angeordnet ist. Die Ablauföffnung kann beispielsweise in Längsrichtung oder seitlich an den Verdrängungsraum anschließen. Zusätzlich oder alternativ kann auch vorgesehen sein, dass zumindest einer der Verdrängungsräume von der Schieberführung und einer Abstufung des Schiebers gebildet ist. Durch die Hubbewegung des Schiebers wird das Volumen des Ringraumes, der durch die Abstufung des Forderschiebers und eine entsprechende Abstufung der Schieberführung gebildet ist, verändert und der Schmierstoff aus der zugeordneten Ablauföffnung herausgedrückt. Das Rückschlagventil, welches dem als Ringraum ausgebildeten Verdrängungsraum zugeordnet ist, ist vorzugsweise seitlich zum Schieber versetzt angeordnet und über radial verlaufende Strömungskanäle an die Schieberführung angeschlossen. Der Schieber weist zumindest eine zugeordnete radiale Öffnung auf.

Im Rahmen einer ersten Ausgestaltung der Erfindung sind zwei Ablauföffnungen vorgesehen, wobei ein erster Verdrängungsraum wie beschrieben als Ringraum ausgebildet ist und wobei ein zweiter Verdrängungsraum in Längsrichtung an das ablaufseitige Ende des Schiebers anschließt. Das zwischen dem ersten Verdrängungsraum und der Axialbohrung des Schiebers angeordnete Rückschlagventil ist gegenüberliegend zur zugeordneten Ablauföffnung angeordnet, wodurch ein besonders kompakter Aufbau erreicht werden kann. Das Rückschlagventil ist beispielsweise durch radial verlaufende Strömungskanäle an das Schiebergehäuse angeschlossen, wobei das beschriebene Rückschlagventil auch auf besonders einfache Weise durch eine Längsbohrung in ein die Schieberführung bildendes Gehäuse eingesetzt sein kann.

In einer zweiten Ausgestaltung der Erfindung können um den Umfang der Dosiervorrichtung auch mehrere Verdrängungsräume vorgesehen sein, die jeweils von der Schieberführung und einer Abstufung des Schiebers gebildet sind, wobei jedem dieser Verdrängungsräume ein Rückschlagventil und eine Ablauföffnung zugeordnet ist. Optional kann auch zusätzlich ein weiterer Verdrängungsraum am ablaufseitigen Ende des Schiebers vorgesehen sein.

Während bei den zuvor beschriebenen Ausgestaltungen das Volumen der Verdrängungsräume bei einem Vorwärtshub unmittelbar durch den Schieber selbst verringert wird, ist in einer alternativen, besonders bevorzugten Ausgestaltung der Erfindung vorgesehen, dass der Schieber bei einem Vorwärtshub auf zumindest zwei Nebenschieber wirkt, die jeweils in einer in dem Gehäuse gebildeten Nebenschieberführung angeordnet sind. Der durch den Schieber einströmende Schmierstoff wird dabei auf die Nebenschieber verteilt. Durch die Anordnung der zusätzlichen Nebenschieber kann die Konstruktion der einzelnen Bauteile der Dosiervorrichtung und insbesondere die Konstruktion des Schiebers stark vereinfacht werden. Auch wenn in Bezug auf die Nebenschieber grundsätzlich eine weitere Unterverteilung entsprechend der zuvor beschriebenen Ausgestaltung des Schiebers möglich ist, ist im Rahmen einer bevorzugten Weiterbildung vorgesehen, dass jedem Nebenschieber genau einer der Verdrängungsräume zugeordnet ist, wobei die Verdrängungsräume auf konstruktiv besonders einfache Weise an den ablaufseitigen Enden der Nebenschieber in den zugeordneten Nebenschieberführungen gebildet sein können. Die Rückschlagventile, die ein Zurückströmen des Schmierstoffes aus den Verdrängungsräumen durch Axialbohrungen der Nebenschieber verhindern, sind in den zugeordneten Nebenschiebern angeordnet.

Der Schieber kann im Rahmen der Erfindung starr mit einem Antrieb gekoppelt sein, wobei jedoch vorzugsweise die Vorwärtshubbewegung oder die Rückwärtshubbewegung gegen die Kraft zumindest einer Rückstellfeder erfolgt, so dass von dem Antrieb lediglich Zug- oder Druckkräfte auf den Schieber übertragen werden müssen. Ist gemäß der weiteren Ausgestaltung der Dosiervorrichtung vorgesehen, dass der Schieber wie zuvor beschrieben auf zwei in dem Gehäuse angeordnete Nebenschieber wirkt, so ist zweckmäßigerweise an jedem der Nebenschieber eine Rückstellfeder angeordnet, um die Nebenschieber und damit auch den Schieber selbst in Rückwärtsrichtung zu bewegen. Die Zuordnung der Vorwärts- und der Rückwärtsrichtung ergibt sich im Rahmen der Erfindung aus der beschriebenen Funktionsweise der Dosiervorrichtung.
Um ein leichte Montage der Dosiervorrichtung und eine einfache Ausgestaltung der einzelnen Komponenten zu ermöglichen, kann das Gehäuse aus zumindest zwei Gehäuseteilen zusammengesetzt sein. Die einzelnen Komponenten der Dosiervorrichtung, also der Schieber, die Rückschlagventile und sofern vorgesehen auch die Nebenschieber und die zumindest eine Rückstellfeder können dabei in die einzelnen Gehäuseteile eingesetzt werden, wobei diese Teile dann nach dem Zusammenfügen der Gehäuseteile in ihrer bestimmungsgemäßen Position gehalten werden.

Die Dosiervorrichtung kann im Rahmen der Erfindung als Auslassvorrichtung in einen Schmierstoffspender integriert sein. Besonders bevorzugt ist jedoch eine Ausgestaltung der Dosiervorrichtung, bei der diese modulartig an einen Schmierstoffspender anschließbar ist. Bei einer solchen Ausgestaltung kann der Schmierstoffspender mit einer erfindungsgemäßen Dosiervorrichtung, welche zwei oder mehr Ablauföffnungen aufweist, kombiniert werden. Entsprechend den Erfordernissen können erfindungsgemäße Dosiervorrichtungen mit einer unterschiedlichen Anzahl an Ablauföffnungen, sowie für eine gleichmäßige oder ungleichmäßige Verteilung der Schmierstoffmengen auf die Ablauföffnungen bereitgehalten werden. Der Schieber der Dosiervorrichtung ist beispielsweise von einem Stößel des Schmierstoffspenders in Vorwärtsrichtung bewegbar.

Ein besonders vorteilhafter Schmierstoffspender, der mit unterschiedlichen Ausführungen der erfindungsgemäßen Dosiervorrichtung kombinierbar ist, ist aus der Druckschrift EP 1 523 637 B1 bekannt. Der Schmierstoffspender mit der daran angeschlossenen Dosiervorrichtung weist einen Schmierstoffvorratsbehälter, einen auf einer Gewindespindel angeordneten Kolben innerhalb des Schmierstoffvorratsbehälters und einen Antriebskopf mit einer an die Gewindespindel angeschlossenen Antriebswelle und einem elektromechanischen Antrieb zur Betätigung der Antriebswelle auf. Die Antriebswelle enthält einen Schmierstoffdurchlasskanal, der in einen Schmierstoffvorratsraum des Schmierstoffvorratsbehälters mündet. In den Schmierstoffdurchlasskanal ist ein Stößel eingesetzt, der eine Axialbohrung mit einem einlaufseitigen Rückschlagventil sowie einen drehfest angeordneten und von einer Druckfeder belasteten Stößelkopf aufweist. Der Stößelkopf liegt unter der Wirkung der Druckfeder an einer Steuerfläche der Antriebswelle auf, wobei die Steuerfläche und die zugeordnete Kontaktfläche des Stößelkopfes als Kulissenfläche ausgebildet sind, die bei einer Drehbewegung der Steuerfläche Hubbewegungen des Stößels bewirken, welche den Schmierstoff durch die Axialbohrung des Stößels zu der erfindungsgemäßen Dosiervorrichtung fördern, welche die geförderte Schmierstoffmenge auf zumindest zwei Ablauföffnungen verteilt. Die erfindungsgemäße Dosiervorrichtung ist jedoch auch ohne Einschränkung mit beliebigen, anders ausgeführten Schmierstoffspendern kombinierbar. Besonders vorteilhaft ist dabei, dass die Dosiervorrichtung bei einer Hubbewegung selbst eine Pumpwirkung erzeugt.

Bei einer Dosiervorrichtung, die als Auslassmodul an einen Schmierstoffspender anschließbar ist oder in einen Schmierstoffspender integriert ist, kann der Schieber als Abschnitt eines einstückig ausgeführten Stößels der Dosiervorrichtung ausgeführt sein. Wenn dabei wie zuvor beschrieben zwei Nebenschieber in dem Gehäuse der Dosiervorrichtung vorgesehen sind, wirkt der Schieber als Abschnitt des Stößels bei einem Vorwärtshub unmittelbar auf die zwei Nebenschieber.

Die Erfindung wird im Folgenden anhand einer lediglich ein Ausführungsbeispiel darstellenden Zeichnung erläutert. Es zeigen schematisch:

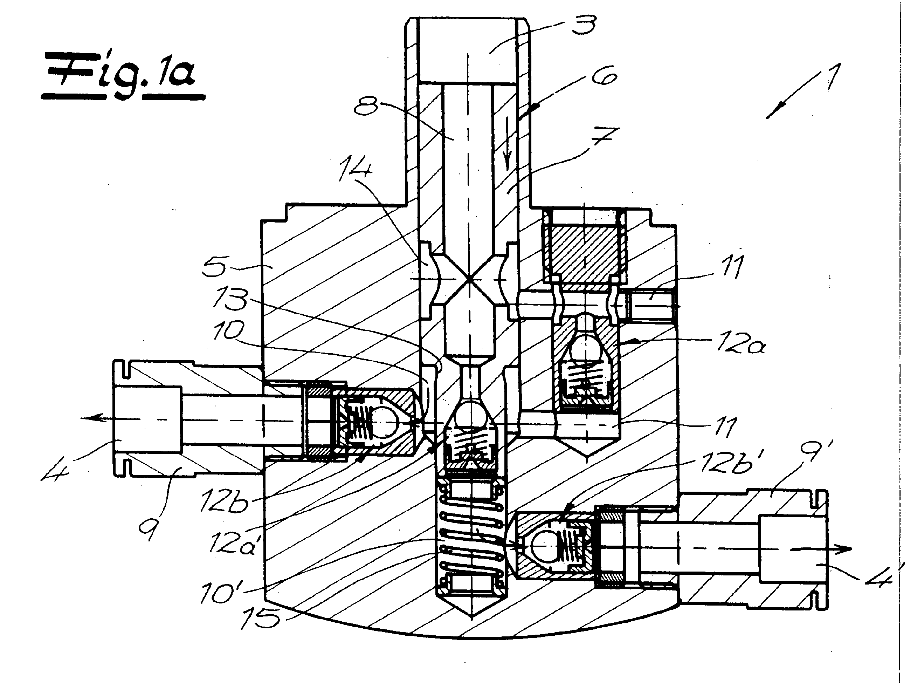

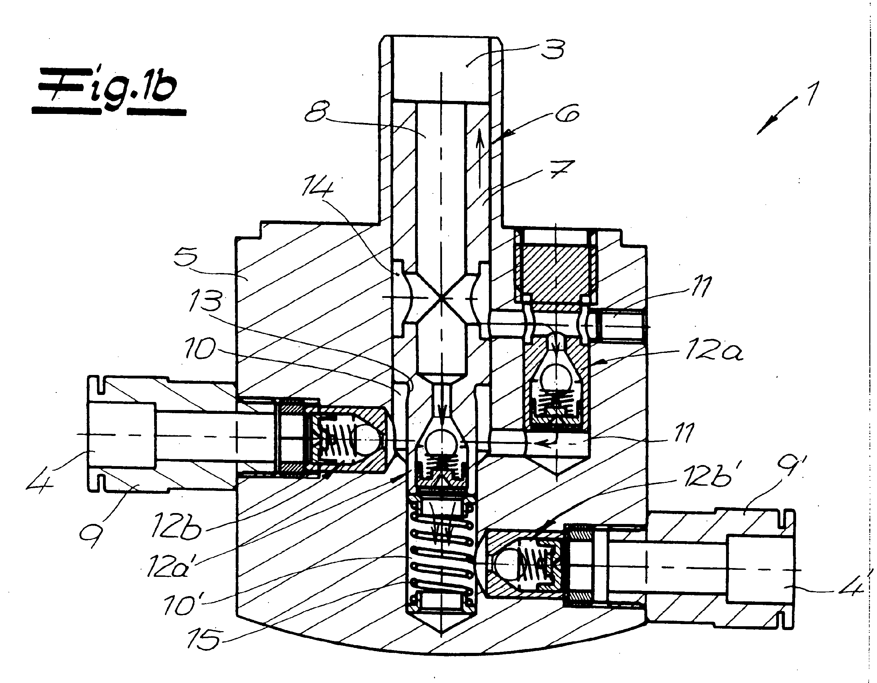

- Fig. 1 a: eine erfindungsgemäße Dosiervorrichtung für einen Schmierstoff-spender bei einem Vorwärtshub eines in einer Schieberführung angeordneten Schiebers,
- Fig. 1 b: die Dosiervorrichtung gem. Fig. 1a bei einem Rückwärtshub des Schiebers,
- Fig. 2: die als Auslassmodul an einen Schmierstoffspender angeschlossene Dosiervorrichtung gem. Fig. 1a und 1b,
- Fig. 3: eine alternative Ausgestaltung der erfindungsgemäßen Dosiervorrichtung in einer Perspektivansicht,
- Fig. 4a: einen Längsschnitt durch die Dosiervorrichtung gemäß Fig. 3 entlang der Ablauföffnungen,
- Fig.4b: einen Längsschnitt durch die Dosiervorrichtung gemäß Fig. 3 entlang der in Fig. 3 dargestellten Gehäuseschrauben.

Fig. 1 a zeigt eine erfindungsgemäße Dosiervorrichtung 1 für einen Schmierstoffspender 2 mit einer Zulauföffnung 3 und zwei Ablauföffnungen 4, 4' zur Aufteilung der geförderten Schmierstoffmengen. In einem Gehäuse 5 der Dosiervorrichtung 1 ist eine Schieberführung 6 für einen in Längsrichtung verschiebbar angeordneten Schieber 7 ausgebildet, der eine zulaufseitige Axialbohrung 8 aufweist. Die Ablauföffnungen 4, 4' sind jeweils in Anschlussstutzen 9, 9' gebildet, an die Schmiermittelleitungen anschließbar sind. Die Ablauföffnungen 4, 4' sind jeweils über einen Verdrängungsraum 10, 10' und Strömungskanäle 11 an die zulaufseitige Axialbohrung 8 des Schiebers 7 angeschlossen, wobei die Verdrängungsräume 10, 10' durch zulaufseitige Rückschlagventile 12a, 12a' voneinander hydraulisch getrennt sind. Der erste Verdrängungsraum 10 ist von der Schieberführung 6 und einer Abstufung des Schiebers 7 gebildet, wobei das zugeordnete Rückschlagventil 12a zwischen dem ersten Verdrängungsraum 10 und der zulaufseitigen Axialbohrung 8 des Schiebers 7 seitlich zum Schieber 7 versetzt angeordnet ist und wobei das Rückschlagventil 12a über radial verlaufende Strömungskanäle 11 an die Schieberführung 6 angeschlossen ist. Der Schieber 7 weist zumindest eine zugeordnete radiale Öffnung 14 auf. Der zweite Verdrängungsraum 10' ist in der Schieberführung 6 gebildet und schließt in Längsrichtung an ein ablaufseitiges Ende des Schiebers 7 an, wobei das dem zweiten Verdrängungsraum 10' zugeordnete Rückschlagventil 12a' in dem Schieber 7 angeordnet ist. Bei einem Vorwärtshub des Schiebers 7 gegen die Kraft einer Rückstellfeder 15 erfolgt eine Volumenverringerung der beiden Verdrängungsräume 10, 10', wobei der Schmierstoff aufgrund der Rückschlagventile 12a, 12a' nicht zu der Axialbohrung 8 des Schiebers 7 zurückströmen kann und gleichzeitig aus den Ablauföffnungen 4, 4' ausströmt. Bei dem Ausströmen des Schmierstoffes werden weitere ablaufseitige Rückschlagventile 12b, 12b', die im Bereich der Ablauföffnungen 4, 4' angeordnet sind, geöffnet.

Fig. 1b zeigt die Dosiervorrichtung bei einem Rückwärtshub des Schiebers 7, wobei die ablaufseitigen Rückschlagventile 12b, 12b' geschlossen sind und ein Zurückströmen des zuvor aus den Ablauföffnungen 4, 4' herausgepressten Schmierstoffes verhindern, so dass bei dem Rückwärtshub der Schmierstoff durch die zulaufseitigen Rückschlagventile 12a, 12a' in die Verdrängungsräume 10, 10' nachströmt.

Wie Fig. 1 a und 1 b zu entnehmen ist, wird in besonders vorteilhafter Weise bei einer Hubbewegung durch jede Ablauföffnung 4, 4' eine klar definierte Schmierstoffmenge gefördert, die dem veränderbaren Volumen des entsprechenden Verdrängungsraumes 10, 10' entspricht. Durch die Ausgestaltung der Verdrängungsräume 10, 10' kann die bei einem Vorwärtshub abgegebene Schmierstoffmenge für jede der Ablauföffnungen 4, 4' genau eingestellt werden. Insbesondere kann im Rahmen der Erfindung vorgesehen sein, dass an beiden Ablauföffnungen 4, 4' gleiche oder unterschiedliche Schmierstoffmengen abgegeben werden.

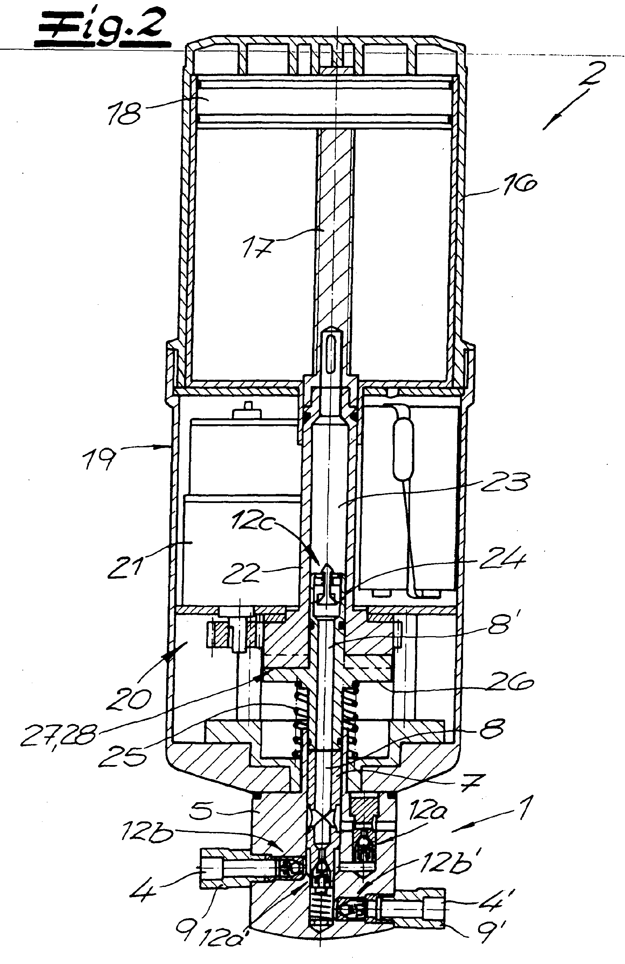

Fig. 2 zeigt die erfindungsgemäße Dosiervorrichtung 1, die als Auslassmodul an einem Schmierstoffspender 2 für viskose Schmierstoffe, insbesondere Schmierfette, angeschlossen ist. Der Schmierstoffspender 2 weist einen Schmierstoffvorratsbehälter 16 mit einem auf einer Gewindespindel 17 angeordneten Kolben 18 und einen Antriebskopf 19 mit einem elektromechanischen Antrieb 20 auf. Die Gewindespindel 17 ist mit einer von einem Elektromotor 21 angetriebenen Antriebswelle 22 des Antriebskopfes 19 lösbar verbunden. Die Antriebswelle 22 enthält einen Schmierstoffdurchlasskanal 23, der in den Schmierstoffvorratsraum des Schmierstoffvorratsbehälters 16 mündet. In den Schmierstoffdurchlasskanal 23 ist ein Stößel 24 eingesetzt, der eine Axialbohrung 8' mit einem einlassseitigen Rückschlagventil 12c sowie einen im Antriebskopf 19 drehfesten sowie an einer Druckfeder 25 axialbeweglich abgestützten Stößelkopf 26 aufweist. Der Stößelkopf 26 liegt unter der Wirkung der Druckfeder 25 an einer Steuerfläche 27 der Antriebswelle 22 an. Die Steuerfläche 27 und die zugeordnete Kontaktfläche 28 des Stößelkopfes 26 sind als Kulissenflächen ausgebildet, die bei einer Drehbewegung der Steuerfläche 27 Stößelhübe bewirken. Der Schieber 7 der als Modul an den Schmierstoffspender 2 angeschlossenen Dosiervorrichtung 1 wird von der Rückstellfeder 15 gegen den Stößel 24 gedrückt, wobei der Schieber 7 gegen die Kraft der Rückstellfeder 15 von dem Stößel 24 des Schmierstoffspenders in Vorwärtshubrichtung zustellbar ist. Die Axialbohrung 8 des Schiebers 7 schließt dabei unmittelbar an die Axialbohrung 8' des Stößels 24 an.

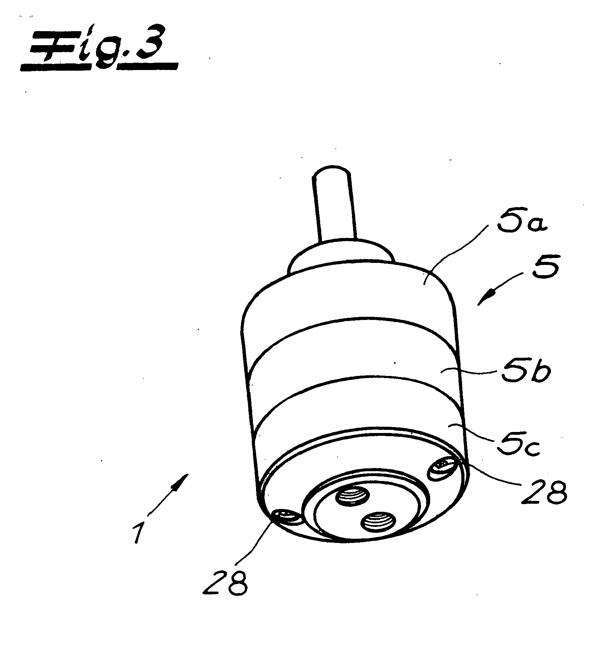

Eine alternative Ausgestaltung der Dosiervorrichtung 1 ist in Fig. 3 dargestellt. Das Gehäuse 5 ist aus drei Gehäuseteilen 5a, 5b, 5c zusammengesetzt, die durch Gehäuseschrauben 28 verbunden sind. In die bodenseitig an dem untersten Gehäuseteil 5c eingebrachten Ablauföffnungen 4, 4' können Schmierstoffleitungen direkt eingeschraubt werden. Alternativ können jedoch auch wie in Fig. 1a bis 2 dargestellt, zusätzliche Anschlussstutzen 9, 9' zur Aufnahme von Schmierstoffleitungen vorgesehen sein, die beispielsweise mit einer Schnellkupplung versehen sind. Der Schieber 7 erstreckt sich an der Oberseite der Dosiervorrichtung aus dem obersten Gehäuseteil 5a heraus.

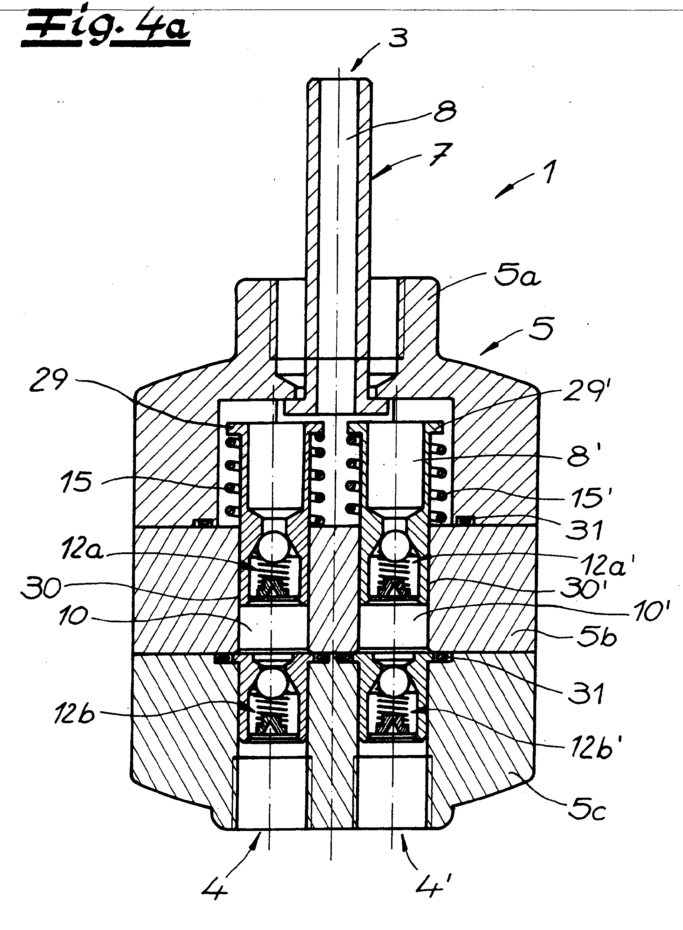

Fig. 4a zeigt die Dosiervorrichtung 1 gemäß Fig. 3 in einem Längsschnitt entlang der Ablauföffnungen 4, 4'. Der in das oberste Gehäuseteil 5a eingesetzte Schieber 7 wirkt bei einem Vorwärtshub auf zwei Nebenschieber 29, 29'. Die Nebenschieber 29, 29' weisen jeweils eine Axialbohrung 8" auf und sind jeweils in einer in dem mittleren Gehäuseteil 5b gebildeten Nebenschieberführung 30, 30' angeordnet. Bei einem Vorwärtshub des Schiebers 7 sind die in die Nebenschieber 29, 29' integrierten Rückschlagventile 12a, 12a' geschlossen, so dass der Schmierstoff von den in den Nebenschieberführungen 30, 30' gebildeten Verdrängungsräumen 10, 10' durch die ablaufseitigen Rückschlagventile 12b, 12b' ausgepresst wird. Die Rückwärtsbewegung des Schiebers 7 erfolgt durch Rückstellfedern 15, 15', die jeweils über einen der Nebenschieber 29, 29' auf den Schieber 7 wirken. Bei dem Rückwärtshub öffnen die zulaufseitigen Rückschlagventile 12a, 12a', so dass die Verdrängungsräume 10, 10' erneut mit einer definierten Schmierstoffmenge gefüllt werden. Ein Rückströmen von Schmierstoff aus den Ablauföffnungen 4, 4' wird dabei durch die geschlossenen ablaufseitigen Rückschlagventile 12b, 12b' vermieden.

Bei der Montage der Dosiervorrichtung 1 können der Schieber 7, die Nebenschieber 29, 29' mit den Rückstellfedern 15, 15' und den zulaufseitigen Rückschlagventilen 12a, 12a' und die ablaufseitigen Rückschlagventile 12b, 12b' auf besonders einfache Weise in die zugeordneten Gehäuseteile 5a, 5b, 5c eingesteckt werden, wobei die beschriebenen Komponenten nach dem Zusammenfügen der Gehäuseteile 5a, 5b,5c in ihrer Funktionsposition gehalten sind. Zur Abdichtung zwischen den Gehäuseteile 5a, 5b, 5c sind zweckmäßigerweise Dichtungen 31 vorgesehen.

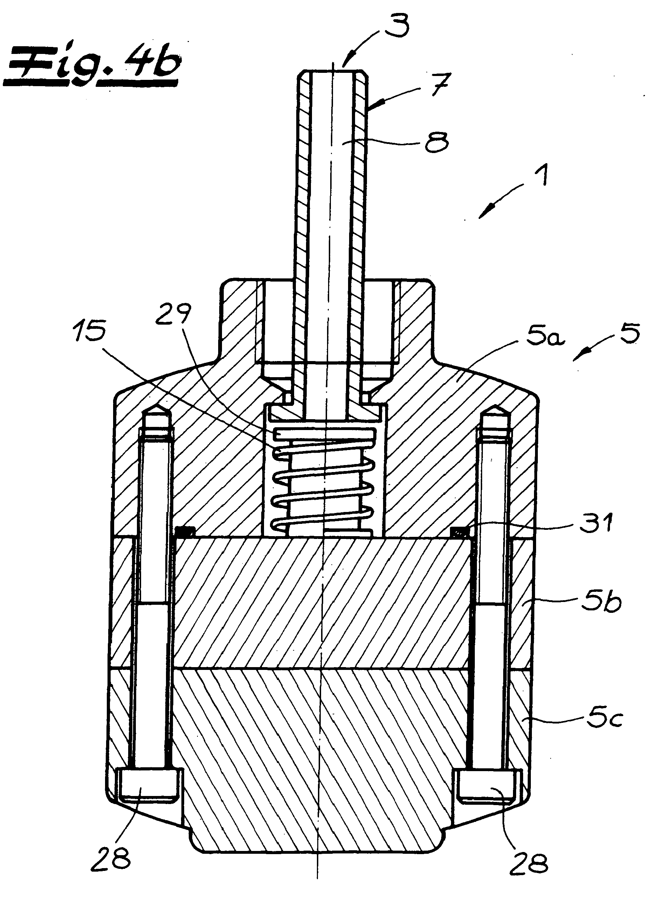

Fig. 4b ist zu entnehmen, dass die Gehäuseteile 5a, 5b, 5c von den Gehäuseschrauben 28 zusammengehalten sind. Für eine Wartung oder Reinigung der Dosiervorrichtung 1 sind lediglich die beiden Gehäuseschrauben 28 zu lösen, um das Gehäuse 5 in seine Gehäuseteile 5a, 5b, 5c zu zerlegen.

## Patentansprüche

1. Dosiervorrichtung für einen Schmierstoffspender (2) mit einer Zulauföffnung (3) und zumindest zwei Ablauföffnungen (4, 4') zur Aufteilung der geförderten Schmierstoffmengen und mit einem in ein Gehäuse (5) der Dosiervorrichtung (1) längsbeweglich eingesetzten Schieber (7), der eine zulaufseitige Axialbohrung (8) aufweist, **dadurch gekennzeichnet, dass** die Ablauföffnungen (4, 4') über jeweils einen Verdrängungsraum (10, 10') an die zulaufseitige Axialbohrung (8) des Schiebers (7) angeschlossen sind und dass die Verdrängungsräume (10, 10') durch Rückschlagventile (12a, 12a') voneinander hydraulisch getrennt sind, wobei ein Vorwärtshub des Schiebers (7) eine Volumenverringerung der Verdrängungsräume (10, 10') und ein Ausströmen des Schmierstoffes aus den Ablauföffnungen (4, 4') bewirkt und wobei ein Rückwärtshub des Schiebers (7) eine Volumenvergrößerung der Verdrängungsräume (10, 10') und ein Nachströmen des Schmierstoffes durch die Rückschlagventile (12a, 12a') bewirkt.

2. Dosiervorrichtung nach Anspruch 1, **dadurch gekennzeichnet, dass** im Bereich der Ablauföffnungen (4, 4') jeweils ein zusätzliches Rückschlagventil (12b, 12b') angeordnet ist.

3. Dosiervorrichtung nach Anspruch 1 oder 2, **dadurch gekennzeichnet, dass** die Vorwärtshubbewegung des Schiebers (7) gegen die Kraft zumindest einer Rückstellfeder (15) erfolgt.

4. Dosiervorrichtung nach einem der Ansprüche 1 bis 3, **dadurch gekennzeichnet, dass** zumindest einer der Verdrängungsräume (10, 10') von einer Schieberführung (6) in dem Gehäuse (5) und einer Abstufung (13) des Schiebers (7) gebildet ist.

5. Dosiervorrichtung nach Anspruch 4, **dadurch gekennzeichnet, dass** das Rückschlagventil (12a), welches dem zwischen der Schieberführung (6) und der Abstufung (13) des Schiebers (7) gebildeten Verdrängungsraum (10) zugeordnet ist, seitlich des Schiebers (7) angeordnet ist, wobei das Rückschlagventil (12a) über radial verlaufende Strömungskanäle (11) an die Schieberführung (6) angeschlossen ist und wobei der Schieber (7) zumindest eine zugeordnete radiale Öffnung (14) aufweist.

6. Dosiervorrichtung nach einem der Ansprüche 1 bis 5, **dadurch gekennzeichnet, dass** einer der Verdrängungsräume (10, 10') in einer Schieberführung (6) gebildet ist und in Längsrichtung an ein ablaufseitiges Ende des Schiebers (7) anschließt, wobei das dem Verdrängungsraum (10') zugeordnete Rückschlagventil (12a') in dem Schieber (7) angeordnet ist.

7. Dosiervorrichtung nach einem der Ansprüche 1 bis 3, **dadurch gekennzeichnet, dass** der Schieber (7) bei einem Vorwärtshub auf zumindest zwei Nebenschieber (29, 29') wirkt, die jeweils in einer in dem Gehäuse (5) gebildeten Nebenschieberführung (30, 30') angeordnet sind.

8. Dosiervorrichtung nach Anspruch 7, **dadurch gekennzeichnet, dass** jedem Nebenschieber (29, 29') genau einer der Verdrängungsräume (10, 10') zugeordnet ist, wobei die Verdrängungsräume (10, 10') ablaufseitig in den Nebenschieberführungen (30, 30') gebildet sind.

9. Dosiervorrichtung nach Anspruch 7 oder 8, **dadurch gekennzeichnet, dass** die Rückschlagventile (12a, 12a'), welche die Verdrängungsräume (10, 10') hydraulisch voneinander trennen, jeweils in dem zugeordneten Nebenschieber (29, 29') angeordnet sind.

10. Dosiervorrichtung nach einem der Ansprüche 1 bis 9, **dadurch gekennzeichnet, dass** das Gehäuse (5) aus zumindest zwei Gehäuseteilen (5a, 5b, 5c) zusammengesetzt ist.

11. Dosiervorrichtung nach einem der Ansprüche 1 bis 10, **dadurch gekennzeichnet, dass** die Dosiervorrichtung (1) als Auslassmodul an einen Schmierstoffspender (2) anschließbar ist, wobei der Schieber (7) von einem Stößel (24) des Schmierstoffspenders (2) in Vorwärtshubrichtung bewegbar ist.

12. Dosiervorrichtung nach einem der Ansprüche 1 bis 10, **dadurch gekennzeichnet, dass** die Dosiervorrichtung (1) in einem Schmierstoffspender (2) integriert ist, wobei der Schmierspender (2) einen beweglich geführten Stößel (24) aufweist.

13. Dosiervorrichtung nach Anspruch 11 oder 12, **dadurch gekennzeichnet, dass** der Schieber (7) als Abschnitt des einstückig ausgeführten Stößels (24) ausgebildet ist.

14. Dossiervorrichtung nach Anspruch 13, **dadurch gekennzeichnet, dass** der Schieber (7) als Abschnitt des Stößels (24) bei einem Vorwärtshub unmittelbar auf zwei Nebenschieber (29, 29') wirkt.
